# EUROPÄISCHE PATENTANMELDUNG

(11) **EP 0 576 416 A1**
(43) Veröffentlichungstag der Anmeldung: **29.12.1993**
(21) Anmeldenummer: 93890119.6
(22) Anmeldetag: 16.06.1993
(51) Int. Cl.: C22B 7/04, C22B 21/00, C01F 7/06

(54) **Verfahren zur Aluminiumherstellung**

(30) Priorität: 17.06.1992 AT 1231/92
(71) Anmelder: WAAGNER-BIRO AKTIENGESELLSCHAFT, A-1221 Wien (AT)
(72) Erfinder: Nölting, Peter, Dr., D-8214 Bernau/Chiemsee (DE); Rezac, Karl-Heinz, Dipl.Ing., A-1220 Wien (AT); Vytlacil, Richard, Dr., A-2346 Maria Enzersdorf (AT)
(74) Vertreter: Wallner, Gerhard, Dipl.-Ing.

(57) **Zusammenfassung**

In einem Verfahren zur Wiedergewinnung des Aluminiums aus der Krätze wird nicht nur ein Sekundäraluminium, sondern auch der Krätzestaub einer Aufbereitung, unterworfen, wobei der Staub nach einer Durchmischung mit Natronlauge und gleichzeitiger Entgasung in die Aluminiumoxidgewinnung aus Bauxit eingebracht wird und somit Verwendung für die Aluminiumoxiderzeugune, wird und somit Verwendung für die Aluminiumoxiderzeugung, findet.

## Beschreibung

Die Erfindung betrifft ein Verfahren zur Aluminiumherstellung nach dem Bayer-Verfahren unter Verwendung von aluminiumhältigen Substanzen, die mit Natronlauge unter Ausgasung behandelt werden.

Bei der Aluminiumerzeugung und auch bei jedem Aluminiumguß bildet sich auf dem Flüssigen Krätze, die vor dem Guß entfernt und abgekühlt wird. Da die Krätze einen hohen Anteil von metallischem Aluminium hat, wird sie oftmals durch autogenes Mahlen (AT-PS 366.101) aufgearbeitet, wobei eine Staubfraktion und eine gröbere metallische Fraktion entsteht. Die metallische Fraktion wird als Sekundäraluminium verwendet, während die Staubfraktion trotz ihres relativ hohen Aluminiumanteils (metallisches Aluminium, Aluminiumsalze und auch Begleitelemente) aus der Aluminiumerzeugung ausgeschieden wird und für eine betriebsfremde Verwendung bereitgehalten wird. Krätzestaub kann infolge des Aluminiumgehaltes als Beruhigungsmittel bei der Stahlerzeugung verwendet werden. Durch den wachsenden Anteil an Strangguß verliert diese Verwendungsmöglichkeit weitgehend an Bedeutung, und der Krätzestaub wird trotz des hohen Aluminiumgehaltes zum Deponiegut.

Die Erfindung behebt diesen Mißstand und hat es sich zur Aufgabe gestellt, den Krätzestaub, dessen zu Al₂O₃ umwandelbarer Anteil meistens größer ist als jener beim Bauxit, für die Erzeugung von Aluminiumoxid zu verwenden und damit ein Deponieproblem zu entschärfen.

Bei der Aluminiumgewinnung aus Krätzen (Abfallstoffen), muß man die Krätze aus der metallurgischen Aluminiumgewinnung bzw. Umschmelzung und sogenannte Salzkrätzen bei Recyclingverfahren von dünnwandigen, stark verunreinigten Aluminiumschrott, z. B. Alu-Dosen unterscheiden, wo Aluminiumschrott unter Salzabschluß geschmolzen wird und daher eine innige Salz-Aluminiumfraktion entsteht, aus der das Salz zurückgewonnen werden kann und das zurückgebliebene Aluminium schließlich gewonnen wird.

Die DDPS 208 338 offenbart ein Recyclingverfahren in dem salzhältige Aluminiumrückstände aus dem Drehrohrofen zuerst mit Wasser ausgelaugt und dann der Schlamm also im Naßverfahren mit laugenhaltiger Mutterlauge ausgelaugt wird, während die unlöslichen Bestandteile deponiert werden.

Die EPS 97 892 offenbart ein thermisches Verfahren zur Gewinnung von Natriumaluminatlauge bei über 180° C und Überdruck in einem Reaktor. Dieses Verfahren geht von geglühten Aluminiumoxyden (Alpha-Aluminiumoxyd , d. s. verbrachte Absorptionsmittel und Katalysatoren) aus und nicht von Krätzen, die noch nicht ausgeglühtes Aluminiumoxyd also Gamma-Aluminiumoxyd enthalten. Ziel und Zweck unserer Erfindung ist nicht die Herstellung von Reinaluminium, sondern eines Produktes welches als Bauxitersatz im BayerVerfahren verwendbar ist. Es ist also ein Verfahren, zur Aufbereitung eines bestimmten Abfalles des sogenannten Krätzestaubes, der bis jetzt auf Deponie geht.

Die US-PS 4 051 222 beschäftigt sich mit einer wässrigen Aufschlemmung von Aluminiumstaub und führt diesen Schlamm in das Bayer-Verfahren ein. Es stellt also ein nasses Aufschluß- verfahren dar. Aluminiumstaub ist metallisches Aluminium, welches bei der Entstubung von Abgasen aus Aluminiumhütten anfällt und als Metall infolge seiner großen Oberfläche nicht verwertbar ist.

Die Erfindung ist dadurch gekennzeichnet, daß als aluminiumhältige Substanz Aluminiumkrätze aus der Aluminiumgießerei verwendet wird, die zuerst autogen gemahlen und anschließend in eine feine staubförmige und in eine grobe hauptsächlich Sekundäraluminium enthaltende Fraktion getrennt wird, anschließend wird die staubförmige Fraktion mit einer Alkalilauge versetzt und die ausgegaste Staublaugemischung in die Aluminatlaugenherstellung der Aluminiumoxidherstellung aus Bauxit als Bauxitersatz eingebracht und zu Aluminiumoxid aufgearbeitet wird. Weitere wesentliche Erfindungsmerkmale sind in den Unteransprüchen 2 bis 5 angegeben.

Das erfindungsgemäße Verfahren ist dem Problem der Krätzestaubentsorgung und dem des Krätzestaubrecyclings speziell angepaßt und zeigt einen Weg, Krätzestaub durch Ausnützung bestehender großtechnischer Anlagen kostengünstigst und wirtschaftlich zu verwerten und die momentan zum Großteil zu deponierenden Abfallmengen durch Rückgewinnen des Aluminiumoxids zu minimieren. Vorteilhaft und kostengünstig für das genannte Verfahren wirkt sich aus, daß mit der Natronlauge ein flüssiges Reagenz gefunden wurde, welches einerseits die Passivierung bei der Reaktion des metallischen Aluminiums am Krätzestaub mit Wasser unter Bildung von Aluminiumhydroxid und Wasserstoffgas so wirkungsvoll aufhebt, daß diese sonst sehr träge verlaufende Reaktion bereits nach kurzer Zeit, insbesondere bei höherer Temperatur (50 bis 90° C), zum Abschluß kommt, und daher das nachfolgende Aufschlußverfahren nicht stört, sondern im Gegenteil ihm förderlich ist. Die beim ersten Verfahrensschritt aus der Reaktion des metallischen Aluminiums und des Aluminiumnitrids entstandenen Gase Wasserstoff und Ammoniak können mit der Brennerluft der großtechnischen Anlagen gefahrlos und umweltfreundlich verbrannt und damit entsorgt werden, wobei der Energiegehalt des Wasserstoffgases für die Beheizung kleinerer Verfahrensschritte zur Verfügung steht.

Die Erfindung ist in der angeschlossenen Figur beispielsweise und schematisch in Form eines Verfahrensschemas dargestellt.

Die Krätze wird in einer Krätzemühle 1 gemahlen und klassiert, wobei eine grobe, stark metallhaltige Fraktion gewonnen wird, die als Sekundäraluminium verwendet werden kann. Die Staubfraktion stellt das eigentliche Problem dar und wird gemäß unserem Verfahren mit Natronlauge im Mischer 2 gemischt, wobei die Mischung ausgast. Das entstehende Gas ist zum großen Teil Wasserstoff, Methan und Ammoniak, also sehr energiereich, und kann daher zur Wärmegewinnung im Verfahren durch Verbrennung verwendet werden. Diese Ausgasung kann durch Erhöhung der Temperatur beschleunigt werden, so daß die Mischung bei etwa 50 bis 90° C, vorzugsweise bei 70° C, erfolgt. Diese ausgegaste Mischung wird nun in die Aluminiumoxidgewinnung 3 einge- bracht, wobei sie mit dem in der Mühle 4 gemahlenen Bauxit im Mischer 5 unter Einwirkung von Natronlauge durchmischt wird. Es entsteht hiebei als Zwischenprodukt Aluminatlauge, aus der in weiteren Verfahrensschritten das gewünschte Aluminiumoxid (Al₂O₃) und als Abfallprodukt Rotschlamm gewonnen wird. Das Aluminiumoxid wird nun in die Elektrolysezelle 6 gebracht und in Reinaluminium reduziert. Durch die Wiederverwendung der staubförmigen Krätze läßt sich beim Bayer-Verfahren bei gleicher Ausbringung von Aluminiumoxid die benötigte Bauxitmenge reduzieren, so daß sich auch die Menge des Abfallproduktes Rotschlamm reduziert. Dies erklärt sich aus der Tatsache, daß der für die Al₂0₃-Herstellung verwertbare Anteil im Krätzestaub im allgemeinen höher als der brauchbare Aluminiumgehalt im Bauxit ist.

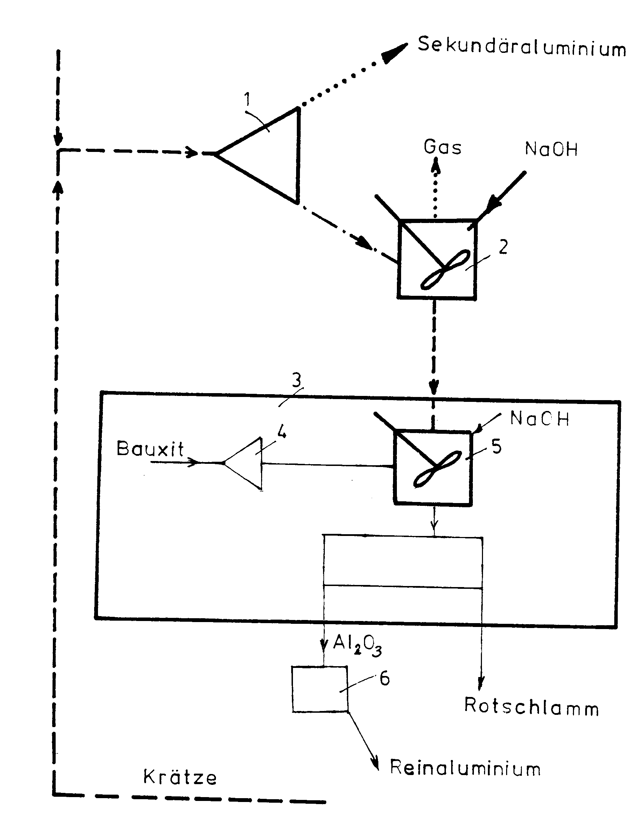

## Patentansprüche

**1)** Verfahren zur Aluminiumherstellung nach dem Bayer Verfahren unter Verwendung von aluminiumhältigen Substanzen, die mit Natronlauge unter Ausgasung behandelt werden, dadurch gekennzeichnet, daß als aluminiumhältige Substanz Aluminiumkrätze aus der Aluminiumgießerei verwendet wird, die zuerst autogen gemahlen und anschließend in eine feine staubförmige und in eine grobe hauptsächlich Sekundäraluminium enthaltende Fraktion getrennt wird, anschließend wird die staubförmige Fraktion mit einer Alkalilauge versetzt und die ausgegaste Staublaugemischung in die Aluminatlaugenherstellung der Aluminiumoxydherstellung aus Bauxit als Bauxitersatz eingebracht und zu Aluminiumoxyd aufgearbeitet.

**2)** Verfahren nach Anspruch 1, dadurch gekennzeichnet, daß zur Realisierung des zweiten Verfahrensschrittes die Mischung aus ausreagiertem Krätzestaub und Lauge in Bayeranlagen durch Beimischung zum gemahlenen Bauxit eingebracht wird.

**3)** Verfahren nach Anspruch 3, dadurch gekennzeichnet, daß der ausreagierte Krätzestaub nach der Bauxitmahlung in den Bauxit-Lauge-Mischer des Aluminiumoxidherstellungsprozesses eingebracht wird.

**4)** Verfahren nach Anspruch 1, dadurch gekennzeichnet, daß die freigesetzten Gase gesammelt und einer Verbrennung im Aluminiumerzeugungsprozeß zugeführt werden.

**5)** Verfahren nach Anspruch 1, dadurch gekennzeichnet, daß die Mischung der staubförmigen Fraktion mit der Alkalilauge bei erhöhter Temperatur, insbesondere zwischen 50 und 90°C, vorzugsweise bei 70°C, erfolgt.
